(19) Europäisches Patentamt
European Patent Office
Office européen des brevets

(11) **EP 2 291 956 B1**

(12) **FASCICULE DE BREVET EUROPEEN**

(45) Date de publication et mention
de la délivrance du brevet:
**05.03.2014 Bulletin 2014/10**

(51) Int Cl.:
***H04L 12/701*** *(2013.01)*

(21) Numéro de dépôt: **08874105.3**

(86) Numéro de dépôt international:
**PCT/FR2008/001482**

(22) Date de dépôt: **22.10.2008**

(87) Numéro de publication internationale:
**WO 2009/133252 (05.11.2009 Gazette 2009/45)**

(54) **PROCEDE DE GESTION D'UN RESEAU DE TRANSMISSION DE TYPE MPLS**

VERFAHREN ZUR VERWALTUNG EINES ÜBERTRAGUNGSNETZWERKS DES MPLS-TYPS

METHOD OF MANAGING A TRANSMISSION NETWORK OF MPLS TYPE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.04.2008 FR 0802392**

(43) Date de publication de la demande:
**09.03.2011 Bulletin 2011/10**

(73) Titulaire: **TDF**
**92541 Montrouge Cedex (FR)**

(72) Inventeur: **FERVEUR, Olivier**
**F-57070 Metz (FR)**

(74) Mandataire: **Reboussin, Yohann Mickaël Noël et al**
**Cabinet Orès**
**36, rue de St Pétersbourg**
**75008 Paris (FR)**

(56) Documents cités:
**EP-A2- 1 246 415**     **US-A1- 2006 104 298**
**US-A1- 2006 182 127**

- **DE CNODDER S ET AL: "Rate adaptive shaping for the efficient transport of data traffic in diffserv networks" COMPUTER NETWORKS, ELSEVIER SCIENCE PUBLISHERS B.V., AMSTERDAM, NL, vol. 35, no. 2-3, 1 février 2001 (2001-02-01), pages 263-285, XP004304845 ISSN: 1389-1286**
- **VAN DEN BERGHE S ET AL: "SONAR: a platform for flexible DiffServ/MPLS traffic engineering" PERFORMANCE, COMPUTING, AND COMMUNICATIONS, 2004 IEEE INTERNATIONAL CO NFERENCE ON PHOENIX, AZ APRIL 15-17, 2004, PISCATAWAY, NJ, USA,IEEE, 15 avril 2004 (2004-04-15), pages 195-201, XP010770063 ISBN: 978-0-7803-8396-8**
- **DAVIE CISCO SYSTEMS B ET AL: "Explicit Congestion Marking in MPLS; rfc5129.txt" IETF STANDARD, INTERNET ENGINEERING TASK FORCE, IETF, CH, 1 janvier 2008 (2008-01-01), XP015055198 ISSN: 0000-0003**

**Description**

La présente invention a pour objet un procédé de gestion d'un réseau de transmission de type MPLS ("Multi Protocol Label Switching" ou commutation de labels multi protocole) apte à partager la bande passante entre plusieurs tunnels lors de la congestion d'un routeur, pour assurer une qualité de service.

L'architecture MPLS permet de transporter sur le réseau Internet un grand volume de trafic utilisateur. Elle repose sur des mécanismes de commutation de labels qui remplacent des traitements longs et complexes associés au relayage de paquets IP pour un traitement plus simple qui repose sur l'insertion d'un en-tête. A cet effet, au moins un court identifiant (sur 32 bits) est inséré afin d'identifier le chemin LSP ("Label Switching Path" ou chemin de commutation de label) auquel le paquet est attribué, le label étant identifié sur 20 bits.

La qualité de service dans les réseaux Internet (IP) a fait l'objet de nombreux articles et publications.

Une première approche connue est le contrôle d'admission par laquelle le contrôle de congestion n'est effectué qu'au moment de l'établissement du lien par un utilisateur, lors de la création du tunnel, alors que le phénomène de congestion peut apparaître bien après.

L'approche préconisée à ce jour est dite ECN ("Explicit Congestion Notification" ou notification explicite d'une congestion).

Il s'agit dans le protocole TCP ("Transmission Control Protocol" ou Protocole de contrôle de transmission) de marquer des paquets TCP-SYN (paquets TCP ayant un drapeau SYN correspondant à une demande d'établissement de connexion pour ouvrir une session) modifiant leur bit CE lors de leur passage dans un routeur congestionné. Ce marquage est effectué par le routeur. Le terminal qui reçoit des paquets ainsi marqués renvoie à l'émetteur des paquets ACK d'accusé de réception qui sont marqués dans un champ dénommé ECN-ECHO. Ce marquage permet alors à l'émetteur des paquets TCP-SYN de diminuer le flux d'envoi de paquets.

Cette approche présente plusieurs inconvénients :

- l'intégration de la technique de notification ECN dans le protocole MPLS n'est pas simple et nécessite de nombreuses modifications,
- le partage de la bande passante lors de la période de congestion est géré en fonction du nombre de connexions TCP, ce qui fait que chaque connexion TCP a la même bande passante,
- il n'y a pas de contrôle possible de la part de l'opérateur du réseau, alors que chaque tunnel dispose d'un nombre de connexions potentiellement différent,
- elle repose nécessairement sur l'action de l'émetteur et du récepteur TCP, qui ne font jamais partie du domaine de confiance de l'opérateur, ce qui fait qu'il n'est pas possible d'éviter de comportements dits "non-citoyens".

La présente invention propose un procédé apte à contrôler lors des périodes de congestion le partage de la bande passante entre les tunnels et de préférence à partager équitablement la bande passante entre les tunnels quel que soit le nombre de connexions TCP véhiculés.

Le document EP1246415 décrit une procédure dans un réseau de type MPLS de partage de la bande passante des tunnels par re-routage des données véhiculées dans ces tunnels en fonction de l'utilisation des dits tunnels.

L'invention concerne un procédé de gestion d'un réseau de transmission de type MPLS par partage de la bande passante entre plusieurs tunnels lors d'une congestion d'un routeur, caractérisé en ce qu'il met en oeuvre pour au moins un tunnel un marquage dynamique des autorisations d'envoi de paquets par ajout d'une information de congestion, et la mise en oeuvre d'un algorithme de régulation d'accès aux dits tunnels à partir de l'information de congestion selon un algorithme dans lequel une limite de débit basse LLA et une limite de débit haute HLA étant attribuée à chaque tunnel, on a pour chaque tunnel :

- en présence d'une information de congestion, une diminution d'un décrément DEC de la limite de débit en cours CLA tant qu'elle n'atteint pas LLA,
- en l'absence d'une information de congestion, une augmentation d'un incrément INC de la limite de débit en cours CLA tant qu'elle n'atteint pas HLA.

Le procédé permet d'améliorer la latence des flux lors d'une congestion.

Le procédé peut également permettre, en mettant en oeuvre des incréments et/ou des décréments variables, de remédier au moins en partie à la non-prédictibilité de l'état stable, et donc d'améliorer encore le fonctionnement.

Ainsi la valeur du décrément DEC peut être d'autant plus élevée que la limite de débit en cours CLA est éloignée de la limite de débit basse LLA et/ou la valeur de l'incrément INC peut être d'autant plus élevée que la limite de débit en cours CLA est proche de la limite de débit basse LLA.

Par exemple, pour tenir compte de cet éloignement ou de cette proximité, le décrément présente un terme proportionnel à CLA/LLA, et/ou l'incrément présente un terme proportionnel à LLA/CLA.

D'autres caractéristiques et avantages de l'invention apparaîtront mieux à la lecture de la description ci-après, en liaison avec les dessins dans lesquels :

- la figure 1a illustre un exemple de mise en oeuvre à trois routeurs, la figure 1b représente une configuration dans lequel trois clients A, B, C, actionnant respectivement X, Y et Z connexions TCP, sont mis en concurrence dans trois réseaux privés locaux VPN différents.
- les figures 2a à 2b représentent une mise en oeuvre du procédé selon l'invention (2a) et un organigramme d'ajustement de la limite du débit en cours IDL (2b),
- les figures 3a à 3d illustrent les performances du procédé selon l'invention par rapport à l'art antérieur, lorsque les clients ont le même nombre de connexions TCP,
- les figures 4a et 4b illustrent les performances du procédé selon l'invention par rapport à l'art antérieur, avec des nombres différents de connexions TCP.
- les figures 5a et 5b illustrent les performances du procédé selon l'invention avec les formules (1) et (2) ci-dessous, alors que les figures 6a et 6b illustrent les performances du procédé selon l'invention avec les formules préférées (3) et (4).

La figure la montre une configuration composée de 3 routeurs 1, 2 et 3, et deux régulateurs d'accès 4 et 5. Un point de congestion 6 est crée sur le routeur central 2 en limitant le débit d'émission sur l'interface de sortie de ce routeur 2.

L'ensemble des trafics est encapsulé pour leur transmission chiffrée dans des réseaux privés virtuels VPN de niveau 2 (VPLS, c'est-à-dire Virtuel Private Services, un service de réseau locaux (LAN) privés virtuels qui présente une interface Ethernet pour les clients).

Les flux des clients A, B et C sont régulés indépendamment les uns des autres sur les routeurs d'accès 4 et 5.

Le marquage est réalisé au sein du paquet MPLS, à l'aide du champ EXP.

Une simulation de flux clients est effectuée à l'aide de générateurs de trafic AGILENT capables d'émuler de multiples transits TCP et UDP.

On utilise des colorieurs TRTCM (Two Rate- Three Color Marker - marqueur tricolore à deux niveaux), les deux niveaux (rates) étant le PIR ("Peak Information Rate") et le CIR ("Committed Information Rate") avec leurs marquages associés vert, jaune ou rouge, un paquet étant marqué rouge s'il dépasse le PIR, et jaune ou vert selon qu'il dépasse ou non le CIR.

Les paquets de couleur rouge sont rejetés en accès et les paquets de couleur jaune ou verte sont transmis sur le réseau avec deux drapeaux comme préconisé par la norme.

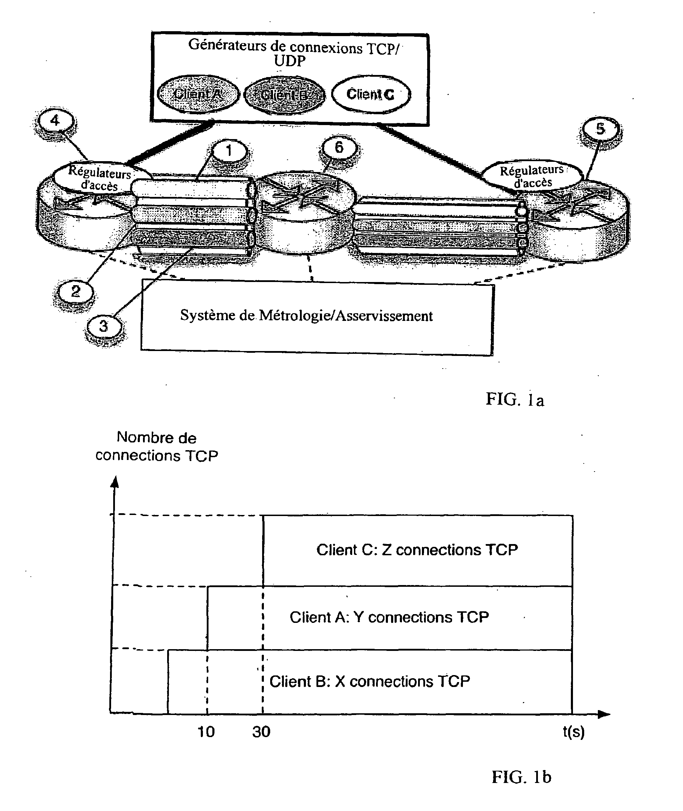

La séquence de test (Fig. 1b) consiste à mettre en concurrence trois clients dans trois réseaux privés virtuels VPN différents.

En plus de ces flux TCP, un flux UDP (User Datagram Protocol ou protocole de datagramme utilisateur) est généré en mode CBR (Constant Bit Rate, c'est-à-dire à taux de bits constant) soit 10 Mb/s pour chaque client. Sur ces flux UDP des mesures de latence et de pertes sont effectuées. Le nombre de connexions TCP d'un client est maintenu par le système d'émulation qui une fois un transfert terminé en relance un nouveau. Plusieurs séries de tests ont été réalisées avec des téléchargements de fichiers de tailles variables allant de 1 kilo-octets à 5 méga-octets.

Tous les clients peuvent monter à 80Mb/s en débit maximum, la limitation en coeur étant effectuée également à 80Mb/s. La séquence de démarrage est montrée dans le schéma (figure 1b).

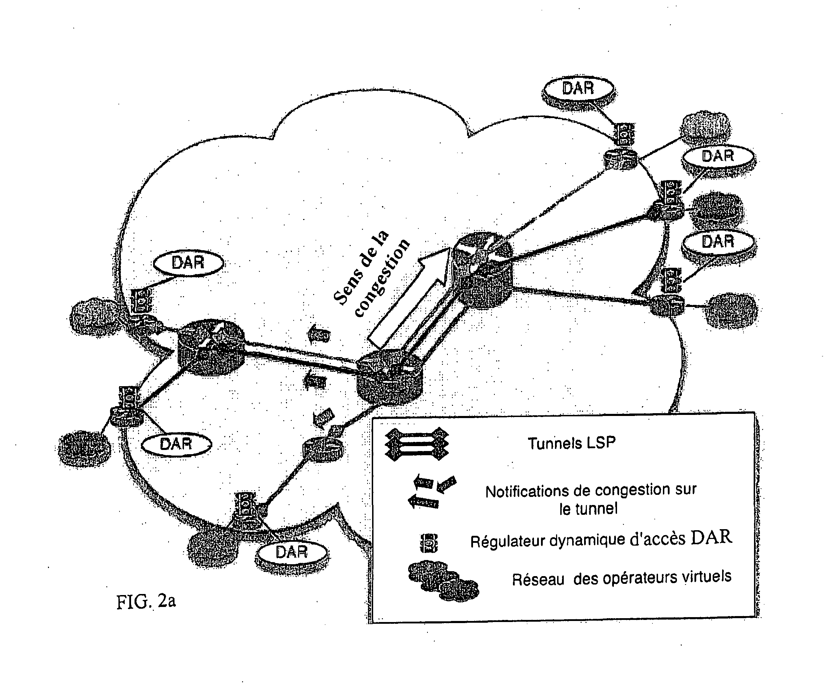

Le réseau représenté schématiquement à la figure 2a est conforme au standard Internet RFC2475 et repose sur une classe AF deux coloris.

Le procédé selon l'invention implique rajoute seulement à l'existant une régulation qui s'effectue tunnel par tunnel. A cet effet, le débit de chaque tunnel dont chacun correspond à un client est contrôlé par un mécanisme de régulation de débit à l'entrée de chaque tunnel (régulateur dynamique d'accès DAR).

Chaque régulateur dynamique d'accès DAR effectue une régulation sur la base de la connaissance d'une congestion existant sur le chemin d'un des tunnels.

La signalisation de la notification de congestion peut être effectuée en ajoutant une information de congestion d'au moins un tunnel à l'aide du protocole de distribution de label (RSVP-TE, LDP) d'un dit tunnel. Ce protocole existe déjà dans le protocole MPLS. RSVP (Resource Reservation Protocole, c'est-à-dire protocole de réservation de ressource) est conçu pour délivrer des requêtes de qualité de service à des routeurs. LDP (Label Distribution Protocole ou protocole de distribution de label) permet de définir les chemins d'un protocole de routage.

Il est également possible de réaliser cette notification autrement, notamment par le marquage de paquets TCP-SYN comme dans le principe ECN. On a vu quels inconvénients en résulteraient, mais cette approche peut permettre une adaptation à minima d'une architecture ECN pré-existante.

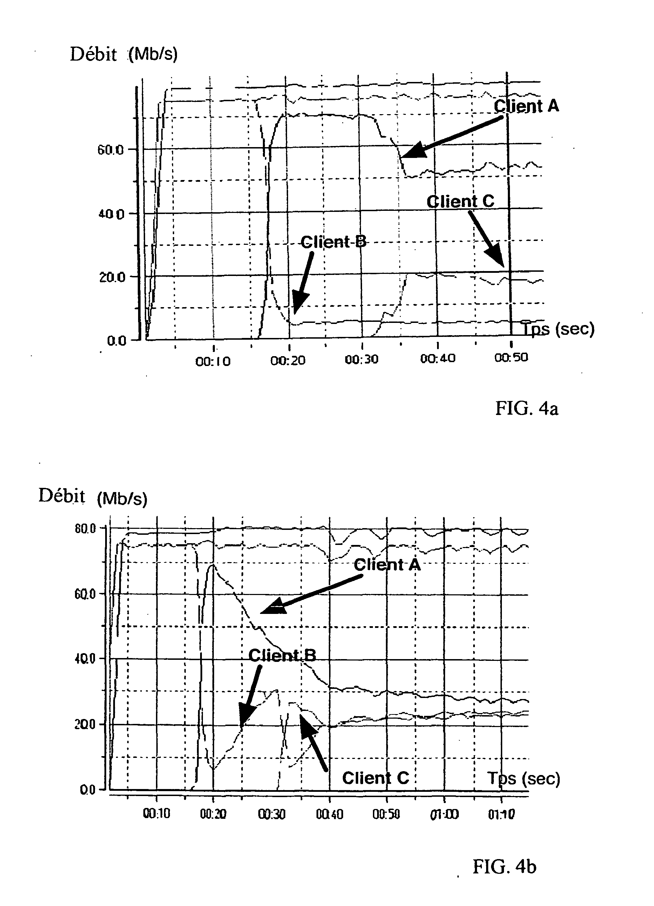

L'algorithme associé aux régulateurs d'accès (figure 4b) permet de gérer les règles de partage entre les tunnels lors des congestions.

Selon le procédé, on modifie dynamiquement les autorisations d'envoi de paquets.

Ci-après, la limite de débit basse garantie est dénommée LLA et la limite en cours est dénommée CLA.

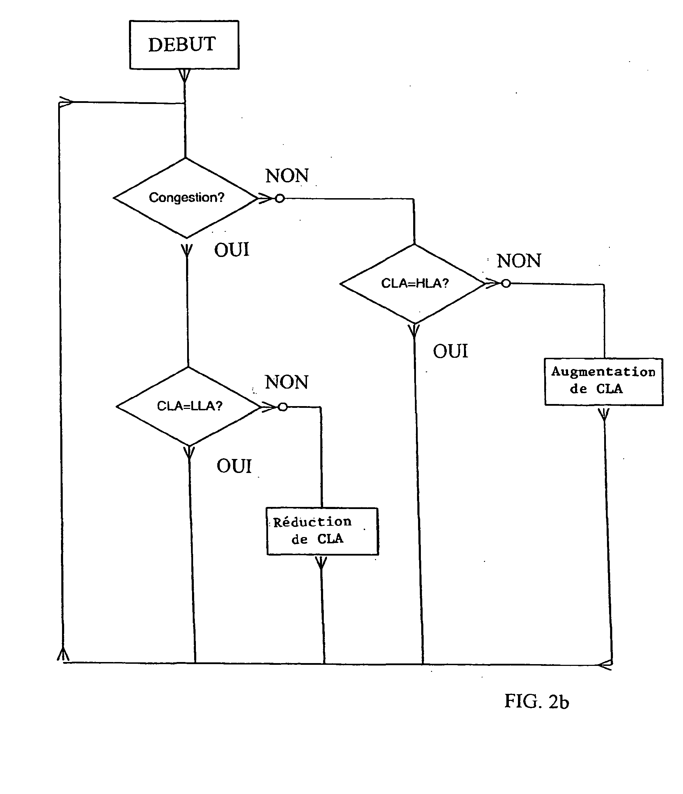

A chaque réception des paquets de signalisation des tunnels, la norme impose l'envoi de ces paquets de manière périodique pour maintenir les labels MPLS - ou périodiquement, un calcul de la limite de débit en cours CLA est effectué selon l'organigramme de la figure 2b. La périodicité du calcul de la limite de débit en cours CLA peut être donc choisie à volonté. Dans les exemples ci-après, cette périodicité a été choisie égale à une seconde.

HLA désigne la limite de débit normale attribuée à un utilisateur. L'organigramme de la figure 2b conduit à réduire le débit en cours CLA jusqu'à la limite basse LLA tant que la congestion persiste.

En l'absence de congestion, il permet d'ajuster la valeur du débit en cours CLA jusqu'à atteindre HLA.

Si le régulateur présente des décréments DEC et des incréments INC constants, lors d'une période de congestion, l'ensemble des régulateurs diminuent la valeur de CLA jusqu'à ce que la somme de tous les CLA soit égale à la bande passante de la liaison. Les régulateurs n'étant pas synchronisés, cela signifie que, la valeur de la somme étant certaine, la valeur du CLA d'un régulateur seul n'est pas déterminable à l'avance. En effet, une même expérience réalisée plusieurs fois peut donner des CLA différents lors d'une congestion. De même, la valeur initiale du régulateur influe directement sur le résultat. Ce qui signifie que l'état de stabilisation lors d'une pseudo-congestion pendant laquelle les flux présents entraînent une congestion du réseau, avec oscillation de la valeur des CLA suite à des détections successives d'états de congestion et de non-congestion dépend des états des régulateurs précédents qui sont non-prédictibles.

Le système transforme tout de même la congestion dans le coeur qui est due à n tunnels en n congestions d'accès. Ce qui signifie qu'un flux donné passe par un tampon non partagé avec les flux des autres tunnels et possède donc une meilleure latence pendant une congestion.

Les valeurs d'augmentation (incrément INC) et de diminution (décrément DEC) du débit en cours CLA sont des paramètres ajustables pour déterminer le partage de la bande passante lors de la période de congestion.

Une solution performante assurant un partage équitable est que la nouvelle valeur soit calculée par le régulateur dynamique d'accès DAR en tenant compte de la distance entre la valeur du débit en cours CLA et de la valeur basse du débit LLA et plus particulièrement en définissant les incréments INC ( en absence de congestion) et les décréments DEC (en cas de congestion) de la valeur du débit en cours CLA en fonction du rapport CLA/LLA.

Par exemple :

$$INC = k\,(LLA/CLA)^n \qquad (1)$$

avec $n \leq 1$ de préférence $n = 1$

$$DEC = k'\,(CLA/LLA)^{n'} \quad (CLA/LLA \text{ est toujours} > 1) \qquad (2)$$

avec $n' \geq 1$ et de préférence $n' = 1$ ; $k$ et $k' > 0$
avec par exemple $k = 100$ bits/s $k' = 1000$ bits/s
INC et DEC sont exprimés en bits/seconde.

Pour accélérer cette convergence, on peut rajouter un coefficient à appliquer qui tient compte des diminutions ou augmentations successives de la valeur de CLA.

La réalisation d'un incrément variable en fonction du rapport CLA/LLA entraîne une suppression du problème de non-prédictibilité de l'état stable. En effet, lors de la pseudo-congestion, chaque régulateur oscille autour d'une valeur. On considère (pour la démonstration) 2 régulateurs disposant à un temps t de congestion de deux rapports CLA/LLA différents. Au temps t+1, le régulateur avec le rapport le plus fort diminue plus son CLA que le régulateur concurrent. La différence entre les 2 rapports au moment t+1 est donc moindre. Le même raisonnement est faisable en non-congestion, par conséquent les deux régulateurs après un temps suffisamment grand convergent vers des rapports CLA/LLA identiques.

Si un régulateur est loin de point de convergence, la diminution (ou l'augmentation) par décréments ou incréments successifs peut s'avérer longue, et se traduire par une succession de décréments DEC (ou d'incréments INC).

Pour accélérer la convergence, on peut modifier les formules (1) et (2) pour tenir compte du nombre $\alpha$ d'incréments successifs et/ou du nombre $\beta$ d'incréments successifs au cours d'une même congestion, par exemple :

$$INC = k\,(LLA/CLA)^n + \alpha^2 k_1 \qquad k_1 \geq 0 \qquad (1')$$

et/ou

$$DEC = k'(CLA/LLA)^{n'} + \beta^2 k_2 \qquad k_2 \geq 0 \qquad\qquad (2')$$

$k$, $k'k_1$ et $k_2$ étant des constantes exprimés en bits/sec (b/s).

Les exemples ci-après ont été réalisés sur la base d'un réseau de test conforme aux figures 1a et 1b, avec pour l'invention un organigramme conforme à la figure 2b, avec pour les exemples 1 et 2, $k = 100$ bits/s et $k' = 1000$ bits/s, $k_1 = k_2 = 1$ bit/s, $n = n' = 1$

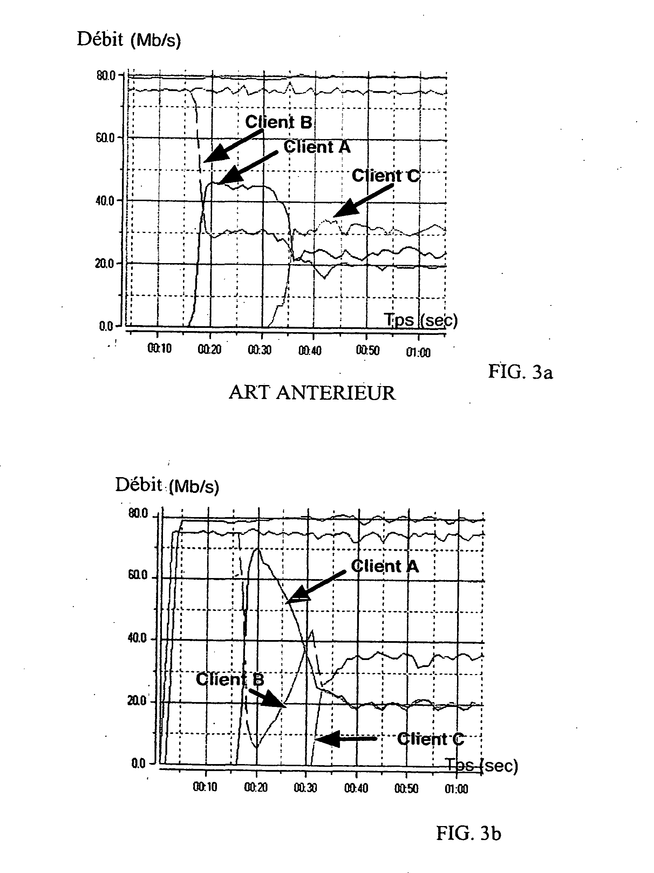

Exemple 1 : Résultat à nombre de TCP égal (figures 3a à 3d)

Le premier test est effectué avec trois clients, chacun composé de trente connexions TCP. Le client B possède une limite basse de débit LLA de 20Mb/s et les autres de 10Mb/s.

On peut constater (figure 3b) qu'avec le procédé selon l'invention, que les deux clients possédant le même débit minimal LLA disposent exactement de la même bande passante, ce qui n'est pas le cas dans l'art antérieur (figure 3a) (contrôle d'admission). Le troisième client qui lui possède un LLA supérieur dispose avec le procédé selon l'invention d'une bande passante supérieure.

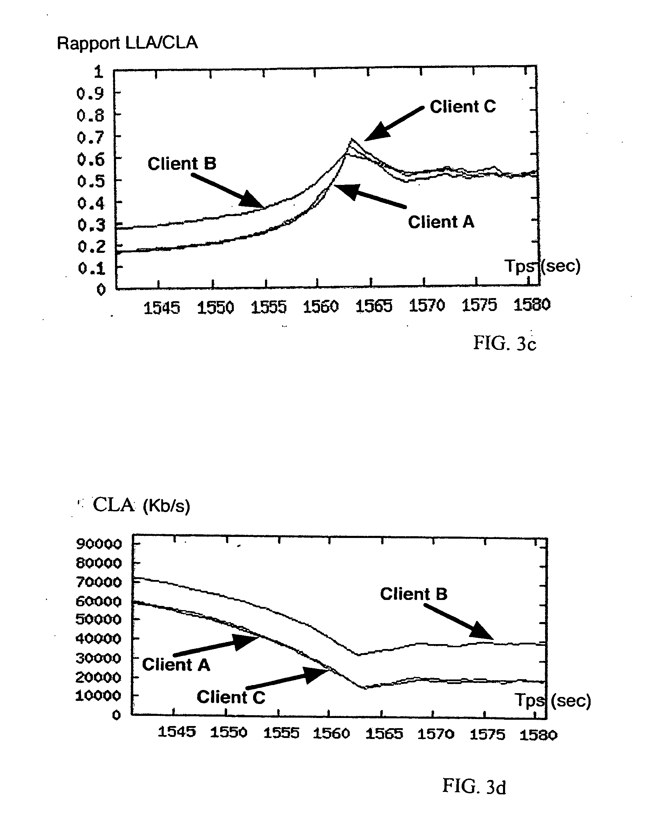

Une observation de la valeur du débit en cours CLA permet de voir (figure 3d) que le système converge vers une égalité des rapports LLA/CLA (figure 3c) pour chacun des clients, ce qui explique que le client disposant d'un LLA supérieur dispose de plus de bande passante. Les valeurs de CLA et de LLA étant des configurations de l'opérateur, un réel contrôle par celui-ci est alors possible.

Exemple 2 : Résultat à nombres de TCP différents (figures 4a et 4b)

Le client A dispose de 50 connexions TCP, le client B de 3 connexions et le client C de 10 connexions. La valeur de débit basse LLA est réglée de manière identique à 10Mb/s pour chacun des trois clients.

Le procédé selon l'invention permet également de converger vers un même rapport LLA/CLA pour tous les clients.

Il est également possible de réaliser des incréments et/ou des décréments variables en fonction de la différence entre LLA et CLA, mais le procédé est alors moins performant qu'avec une variation en fonction du rapport entre ces deux valeurs, même si la convergence est améliorée par rapport à la mise en oeuvre de valeurs fixes.

L'utilisation des formules (1) et (2) ou bien (1') et (2') permet de réaliser un partage équitable, cependant le délai pour obtenir l'équité varie en fonction de la valeur du HLA de chaque contrat et ce même si le rapport LLA/CLA est similaire entre deux contrats.

L'utilisation des formules suivantes permette de rétablir un temps de convergence similaire pour chaque utilisateur en tenant compte la valeur de son débit maximal HLA :

$$INC = a * HLA * (LLA/CLA)^n + k_1 \alpha^2 \qquad\qquad (3)$$

$$DEC = a' * HLA * (CLA/LLA)^{n'} + k_2 \beta^2 \qquad\qquad (4)$$

Avec :

$0<a<1$ $\quad n \leq 1$ et de préférence $n = 1$
$0<a'<1$ $\quad n' \geq 1$ et de préférence $n' = 1$
$\qquad\qquad k_1 \geq 0$ et de préférence $k_1 = 0$
$\qquad\qquad k_2 \geq 0$ et de préférence $k_1 = 0$

$a$, $a'$, $k_1$ et $k_2$ sont des constantes.

Les formules (3) et (4) permettent d'homogénéiser les temps de convergence quels que soient les paramètres de chaque utilisateur.

Il est également possible d'utiliser les formules (2) et (3) ou bien (1) et (4).

Un exemple particulièrement avantageux de mise en oeuvre consiste à ne proposer que quelques types de contrats garantis. Ainsi par exemple, un client peut contractualiser une bande passante HLA avec une bande passante garantie LLA, selon l'un des trois contrats de type G (LLA = 0,7 HLA), S (LLA = 0,5 HLA) ou B (LLA = 0,2 HLA).

Exemple 3:

Considérons un lien de 1Gb/s où apparaît une congestion. Sur ce lien nous retrouvons les contrats suivants :

- 10 contrats de type G à 10Mb/s    (HLA = 10 Mb/s)
- 60 contrats de type S à 10Mb/s    "
- 100 contrats de type B à 10Mb/s    "
- 1 contrat de type G à 100Mb/s    (HLA = 100 Mb/s)
- 1 contrat de type S à 100Mb/s    "
- 1 contrat de type B à 100Mb/s    "

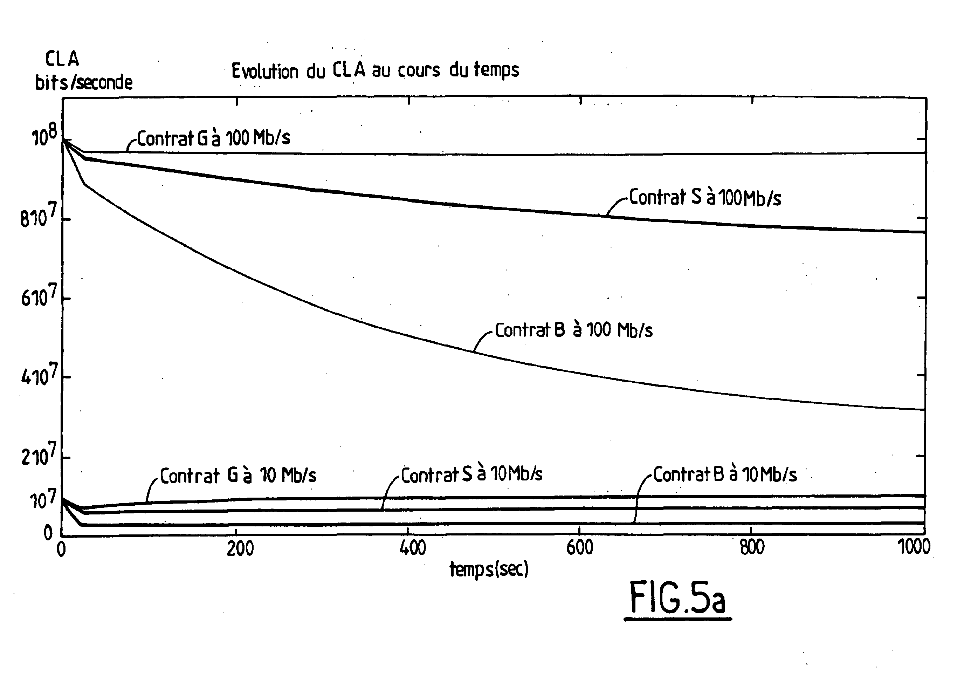

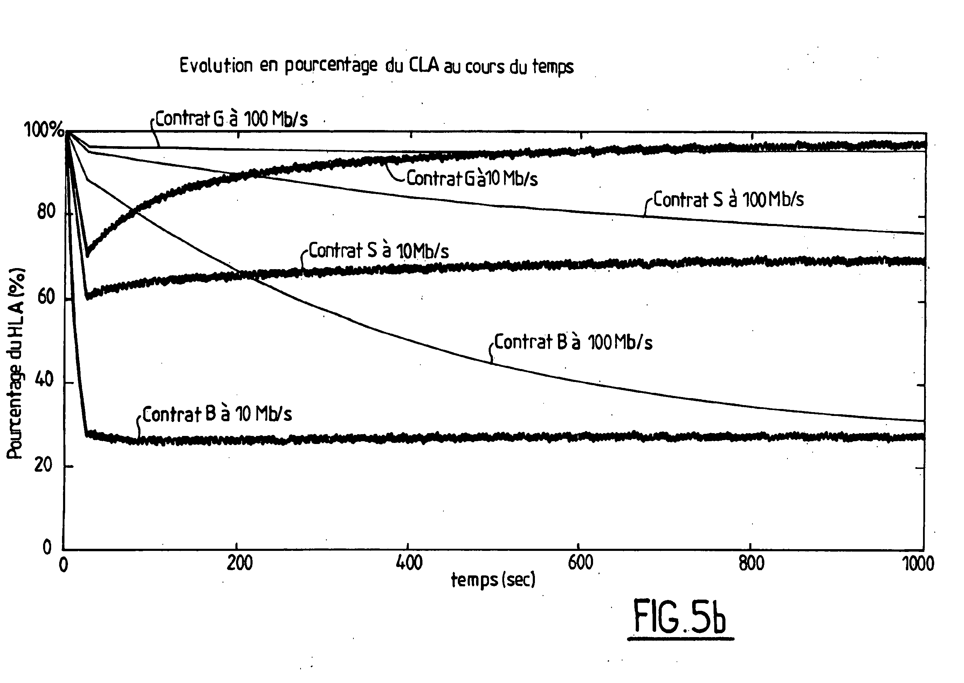

L'utilisation des formules (1) et (2) (k= k' =100 bits/s ; n = n' = 1) permet d'obtenir les courbes des figures 5a et 5b.

A la figure 5a, la valeur du débit en cours CLA est représentée en fonction du temps pour 6 contrats :

3 contrats avec HLA = 100 Mb/s de type G, S et B ;
et 3 contrats avec HLA = 10 Mb/s de type G, S et B.

A la figure 5b, le pourcentage du débit en cours CLA par rapport à la limite de débit haute HLA est représentée pour ces mêmes 6 contrats.

On peut y observer que pour les contrats à 100Mb/s (surtout de type S et B), plus de 1000 secondes après le début de la congestion, le débit en cours CLA continue de décroître et n'est toujours pas à une situation stable alors que les contrats à 10Mb/s sont stabilisés.

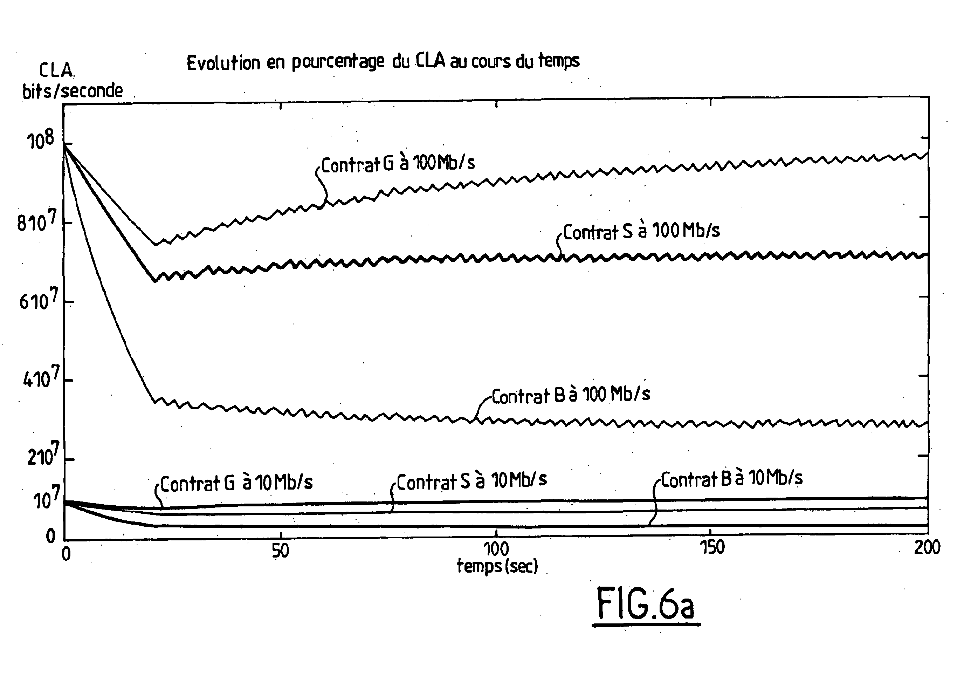

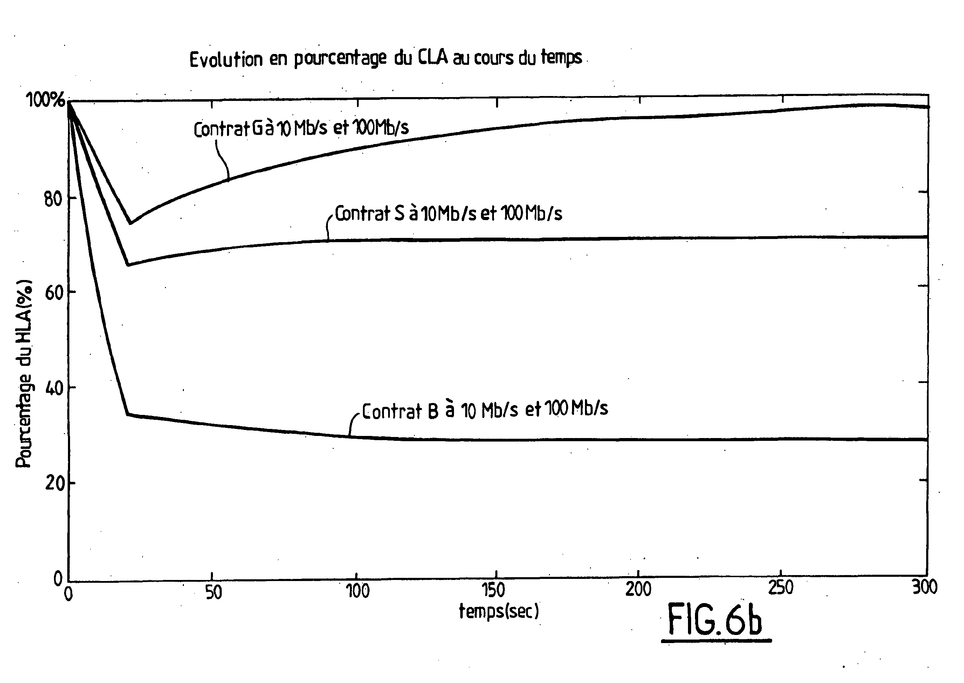

Les figures 6a et 6b correspondent respectivement aux figures 5a et 5b et ont été réalisées pour ces mêmes 6 contrats, mais avec les formules (3) et (4) avec a=a'=1/100000 ; n = n' = 1, et $k_1 = k_2 = 0$.

On observe alors un fonctionnement similaire entre tous les contrats à 10Mb/s et 100Mb/s. La figure 6b montre une superposition des courbes du débit en cours CLA en pourcentage de HLA pour tous les contrats de même type quelque soit la valeur de leur débit maximal HLA.

On notera qu'avec les formules (3) et (4), les termes additionnels $k_1\alpha^2$ et $k_2\beta^2$ mis en oeuvre dans les formules (1') et (2') apportent moins d'avantages et peuvent donc être facilement omis ($k_1 = k_2 = 0$).

Les exemples ci-dessus concernent la mise en oeuvre du procédé au cours d'une congestion pour décrémenter la valeur de CLA. En fin de congestion, les formules données pour l'incrément INC apportent symétriquement les mêmes avantages pour un retour de CLA vers HLA.

## Revendications

1. Procédé de gestion d'un réseau de transmission de type MPLS par partage de la bande passante entre plusieurs tunnels **dont chacun correspond à un client** lors d'une congestion d'un routeur, **caractérisé en ce qu'**il met en oeuvre pour au moins un tunnel un marquage dynamique des autorisations d'envoi de paquets par ajout d'une information de congestion, et la mise en oeuvre d'un algorithme de régulation d'accès aux dits tunnels à partir de l'information de congestion selon un algorithme dans lequel une limite de débit basse LLA et une limite de débit haute HLA étant attribuée à chaque tunnel, on a pour chaque tunnel :

   - en présence d'une information de congestion, une diminution d'un décrément DEC de la limite de débit en cours CLA tant qu'elle est supérieure à LLA,
   - en l'absence d'une information de congestion, une augmentation d'un incrément INC de la limite de débit en cours CLA tant qu'elle n'atteint pas HLA.

2. Procédé selon la revendication 1, **caractérisé en ce que** la valeur du décrément DEC est d'autant plus élevée que la limite de débit en cours CLA est éloignée de LLA.

3. Procédé selon la revendication 2, **caractérisé en ce que** la valeur du décrément DEC est proportionnelle à CLA/LLA.

4. Procédé selon la revendication 2, **caractérisé en ce que**

$$DEC = (k' \, CLA/LLA)^{n'} + k_2\beta^2$$

$k'$ et $k_2$ étant des constantes exprimées en bits/sec, $k_2 \geq 0$ et $n' \geq 1$
$\beta$ désignant le nombre de décréments successifs au cours d'une même congestion.

**5.** Procédé selon la revendication 2, **caractérisé en ce que** :

$$DEC = a' \, HLA \, (CLA/LLA)^{n'} + k_2\beta^2$$

avec $0 < a' < 1$ et $n' \geq 1$, $k_2$, étant une constante exprimée en b/s en $k_2 \geq 0$, $\beta$ désignant le nombre de décréments successifs au cours d'une même consigne.

**6.** Procédé selon une des revendications précédentes, **caractérisé en ce que** la valeur de l'incrément INC est d'autant plus élevée que la limite de débit en cours CLA est proche de LLA.

**7.** Procédé selon la revendication 6, **caractérisé en ce que** la valeur de l'incrément INC est proportionnelle à LLA/CLA.

**8.** Procédé selon la revendication 6, **caractérisé en ce que**

$$INC = (k \, LLA/CLA)^{n} + k_1\alpha^2 \text{ avec } k_1 \geq 0 \text{ et } n \leq 1$$

$\alpha$ désignant le nombre d'incréments successifs au cours d'une même congestion
$k$ et $k_1$ étant des constantes exprimées en bits/sec.

**9.** Procédé selon la revendication 6, **caractérisé en ce que** :

$$INC = a \, HLA \, (LLA/CLA)^{n} + k_1\alpha^2$$

avec $0<a<1$ et $n \leq 1$, $k_1$ étant une constante exprimée en b/s et $\alpha$ désignant le nombre de d'incréments successifs au cours d'une même consigne.

**10.** Procédé selon une des revendications précédentes, **caractérisé en ce qu'**il met en oeuvre un dit ajout d'une information de congestion d'au moins un tunnel, à un protocole de distribution de label dudit tunnel.

**Patentansprüche**

**1.** Verfahren zur Verwaltung eines Übertragungsnetzes vom MPLS-Typ durch Aufteilung der Bandbreite zwischen mehreren Tunneln, von welchen jeder einem Teilnehmer entspricht, bei einer Überlastung eines Routers, **dadurch gekennzeichnet, dass** es für wenigstens einen Tunnel eine dynamische Markierung von Sendeautorisierungen von Paketen durch Hinzufügung einer Überlastungsinformation einsetzt und es einen Zugangsregulierungsalgorithmus auf die Tunnel ausgehend von der Überlastungsinformation gemäß einem Algorithmus einsetzt, bei welchem eine untere Durchsatzgrenze LLA und eine obere Durchsatzgrenze HLA jedem Tunnel zugewiesen werden, wobei man für jeden Tunnel hat:

- bei Vorhandensein einer Überlastungsinformation, eine Verringerung um ein Dekrement DEC der momentanen Durchsatzgrenze CLA, sodass sie größer ist als LLA,
- bei Nichtvorhandensein einer Überlastungsinformation, eine Vergrößerung um ein Inkrement INC der momentanen Durchsatzgrenze CLA, sodass sie nicht HLA erreicht.

**2.** Verfahren nach Anspruch 1, **dadurch gekennzeichnet, dass** der Wert des Dekrements DEC umso höher ist, wie die momentane Durchsatzgrenze CLA von LLA entfernt ist.

3. Verfahren nach Anspruch 2, dadurch dass der Wert des Dekrements DEC proportional zu CLA/LLA ist.

4. Verfahren nach Anspruch 2, **dadurch gekennzeichnet, dass**

$$DEC = (k'\ CLA/LLA)^{n'} + k_2\beta^2,$$

wobei k' und $k_2$ in bits/s ausgedrückte Konstanten sind, $k_2 \geq 0$ und $n' \geq 1$,
wobei $\beta$ die Anzahl von aufeinanderfolgenden Dekrementen im Verlauf derselben Überlastung bezeichnet.

5. Verfahren nach Anspruch 2, **dadurch gekennzeichnet, dass**:

$$DEC = a'\ HLA(CLA/LLA)^{n'} + k_2\beta^2,$$

mit $0 < a' < 1$ und $n' \geq 1$, wobei $k_2$ eine in b/s ausgedrückte Konstante und $k_2 \geq 0$ ist, wobei $\beta$ die Anzahl von aufeinanderfolgenden Dekrementen desselben Einstellvorgangs sind.

6. Verfahren nach einem der vorhergehenden Ansprüche, **dadurch gekennzeichnet, dass** der Wert des Inkrements INC umso höher ist, wie die momentane Durchsatzgrenze CLA näher an LLA ist.

7. Verfahren nach Anspruch 6, **dadurch gekennzeichnet, dass** der Wert des Inkrements INC proportional zu LLA/CLA ist.

8. Verfahren nach Anspruch 6, **dadurch gekennzeichnet, dass**

$$INC = (k\ LLA/CLA)^{n} + k_1\alpha^2,\ \text{mit}\ k_1 \geq 0\ \text{und}\ n \leq 1,$$

wobei $\alpha$ die Anzahl von aufeinanderfolgenden Inkrementen im Verlauf derselben Überlastung bezeichnet,
wobei k und $k_1$ in bits/s ausgedrückte Konstanten sind.

9. Verfahren nach Anspruch 6, **dadurch gekennzeichnet, dass**:

$$INC = a\ HLA(LLA/CLA)^{n} + k_1\alpha^2,$$

mit $0 < \alpha < 1$ und $n \leq 1$, wobei k1 eine in b/s ausgedrückte Konstante ist und $\alpha$ die Anzahl von aufeinanderfolgenden Inkrementen im Verlauf desselben Einstellvorgangs bezeichnet.

10. Verfahren nach einem der vorhergehenden Ansprüche, **dadurch gekennzeichnet, dass** es eine der genannten Hinzufügung einer Überlastungsinformation für wenigstens einen Tunnel einsetzt, mit einem Protokoll zur Verteilung eines Labels des Tunnels.

**Claims**

1. A method of managing a transmission network of MPLS type by acting during congestion of a router to share the bandwidth among a plurality of tunnels, each corresponding to a client, the method being **characterized in that**, for at least one tunnel, it implements dynamic marking of authorizations to send packets by adding congestion information, and implements an algorithm for controlling access to said tunnels on the basis of the congestion information using an algorithm in which a low data rate limit LLA and a high data rate limit HLA are allocated to each tunnel, and for each tunnel:

    • in the presence of congestion information, the current data rate limit CLA is reduced by a decrement DEC so long as CLA is greater than LLA; and
    • in the absence of congestion information, the current data rate limit CLA is increased by an increment INC so long as CLA has not reached HLA.

2. A method according to claim 1, **characterized in that** the value of the decrement DEC increases for the current data rate limit CLA being increasingly distant from LLA.

3. A method according to claim 2, **characterized in that** the value of the decrement DEC is proportional to CLA/LLA.

4. A method according to claim 2, **characterized in that**:

$$DEC = (k' \ CLA/LLA)^{n'} + k_2\beta^2$$

where:

k' and $k_2$ are constants expressed in bits per second;
$k_2 \geq 0$ and $n' \geq 1$; and
$\beta$ designates the number of successive decrements during the same period of congestion.

5. A method according to claim 2, **characterized in that**:

$$DEC = a' \ HLA(CLA/LLA)^{n'} + k_2\beta^2$$

where:

$0 < a' < 1$ and $n' \geq 1$;
$k_2$ is a constant expressed in b/s; and
$k_2 \geq 0$;
$\beta$ designates the number of successive decrements during the same setpoint.

6. A method according to any preceding claim, **characterized in that** the value of the increment INC increases with the current data rate limit CLA being increasingly close to LLA.

7. A method according to claim 6, **characterized in that** the value of the increment INC is proportional to LLA/CLA.

8. A method according to claim 6, **characterized in that**:

$$INC = (k \ LLA/CLA)^{n} + k_1\alpha^2$$

where:

$k_1 \geq 0$ and $n \leq 1$;
$\alpha$ designates the number of successive increments during the same period of congestion; and
k and $k_1$ are constants expressed in bits per second.

9. A method according to claim 6, **characterized in that**:

$$INC = a \ HLA(LLA/CLA)^{n} + k_1\alpha^2$$

where:

$0 < a < 1$ and $n \leq 1$;
$k_1$ is a constant expressed in b/s; and
$\alpha$ designates the number of successive increments during the same setpoint.

**10.** A method according to any preceding claim, **characterized in that** it implements a said addition of congestion information for at least one tunnel in a label distribution protocol of said tunnel.

Générateurs de connexions TCP/ UDP

Client A    Client B    Client C

4

Régulateurs d'accès

1    6    5

Régulateurs d'accès

2

3

Système de Métrologie/Asservissement

FIG. 1a

Nombre de connections TCP

Client C: Z connections TCP

Client A: Y connections TCP

Client B: X connections TCP

10    30    t(s)

FIG. 1b

Sens de la congestion

DAR

DAR

DAR

DAR

DAR

DAR

DAR

Tunnels LSP

Notifications de congestion sur le tunnel

Régulateur dynamique d'accès DAR

Réseau des opérateurs virtuels

FIG. 2a

FIG. 2b

Débit (Mb/s)

FIG. 3a

ART ANTERIEUR

Débit (Mb/s)

FIG. 3b

Rapport LLA/CLA

FIG. 3c

CLA (Kb/s)

FIG. 3d

Débit (Mb/s)

FIG. 4a

Débit (Mb/s)

FIG. 4b

CLA
bits/seconde

Evolution du CLA au cours du temps

$10^8$

Contrat G à 100 Mb/s

Contrat S à 100 Mb/s

$8 \cdot 10^7$

$6 \cdot 10^7$

Contrat B à 100 Mb/s

$4 \cdot 10^7$

$2 \cdot 10^7$

Contrat G à 10 Mb/s

Contrat S à 10Mb/s

Contrat B à 10Mb/s

$10^7$

0

0          200          400          600          800          1000

temps(sec)

FIG.5a

EP 2 291 956 B1

Evolution en pourcentage du CLA au cours du temps

FIG.5b

EP 2 291 956 B1

Evolution en pourcentage du CLA au cours du temps

FIG.6a

EP 2 291 956 B1

Evolution en pourcentage du CLA au cours du temps

Contrat G à 10 Mb/s et 100Mb/s

Contrat S à 10Mb/s et 100 Mb/s

Contrat B à 10 Mb/s et 100 Mb/s

temps(sec)

FIG.6b

**EP 2 291 956 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1246415 A